# EUROPEAN PATENT APPLICATION

(11) **EP 2 292 313 A2**
(43) Date of publication of application: **09.03.2011**
(21) Application number: 10175279.8
(22) Date of filing: 03.09.2010
(51) Int. Cl.: B01D 46/54, B01D 46/00, B01D 53/22, B01D 63/06, B01D 63/08, B01D 46/48, G01N 1/22

(54) **Device and method for filtering out particulate matter from a gas**

(30) Priority: 04.09.2009 NL 2003439
(71) Applicant: Stichting Energieonderzoek Centrum Nederland, 1755 LE Petten (NL)
(72) Inventor: Otjes, René Paul, 1741 DA Schagen (NL)
(74) Representative: van Westenbrugge, Andries

(57) **Abstract**

Filter device for filtering out particulate matter from a gas and particulate matter mixture, having a supply region for a liquid and for a gas with particulate matter, a discharge region for discharging a gas and a liquid with particulate matter suspension, a filter chamber with an primary channel (108) along an axis (A) to which the liquid and the gas with particulate matter are supplied, a secondary channel (110) from which the filtered gas is discharged, a filter element (114) between the primary channel and the secondary channel with an active filter surface permeable to the gas and impermeable to the particulate matter and the liquid, wherein the filter device has means (504, 506, 508, 510) for producing a volume packet train of liquid and gas with particulate matter (210), and wherein the filter chamber is arranged to let the volume packet train (210) flow through the primary channel (108) along the active filter surface, and parallel to the axis (A).

## Description

### TECHNICAL FIELD

The invention relates to a filtering device and a method for filtering out particulate matter from a gas. The invention further relates to a method for measuring specific properties of particulate matter.

### BACKGROUND

"Particulate matter" is the generic term for particles floating in the air, having various sizes, origins, and chemical compositions. Epidemiological and toxicological research has demonstrated that inhalation of particulate matter is detrimental to one's health. It is known that an unequivocal epidemiological connection exists between early death and particulate matter concentrations. In industry for example, experience has taught that unwanted generation of particles during production processes can to a considerable extent be harmful to the health of personnel. Industries in which this problem may be significant are, for instance, the metal industry, lumber industry, and stone industry. The exposure of workers and civil population to particulate matter is to an increasing degree subjected to restrictions by means of recommendation and legislation originating from national governments and international organizations. Employers and authorities are expected to guard the safety of the working environment or everyday environment of personnel and population.

In a determination of particulate matter for a safety assessment measurement, systems are required with which concentrations and properties of particulate matter may be established. A measurement system that can be deployed on a large-scale is useful in determining epidemiological relations between specific properties of particulate matter and health detriment. With the aid of results from such research, measures can be efficiently formulated and taken with the purpose of diminishing this health detriment and related economical damage. A measurement system that is uncomplicated to use and has relatively little operational limitations, contributes to this goal by being deployable easily as well as in arbitrary locations. It is assumed that the mass concentration of particulate matter alone is not an efficient indicator, but that other specific properties of particulate matter constitute the cause of health detriment. Unfortunately, no instruments exist yet that can measure this type of specific properties in a generally employable manner.

Particulate matter consists for a considerable part of salts that can be dissolved in liquids like water. Particulate matter also contains non-dissolvable components. Consequently, particulate matter that is transferred to a liquid may be both specified as a suspension and a solution.

Known methods for transferring airborne particulate matter to a liquid exploit the accrual of particulate matter by steam injection, followed by separation methods that exploit differences in mass inertia, e.g. centrifugal separation or impaction. Employing steam injection has the disadvantage that the temperature of particulate matter is temporarily raised, as a result of which the aforementioned other specific properties of particulate matter may severely change.

A technique that separates out particulate matter from the gas without steam injection is described in (Al-Horr *et al,* 2003). Within the system discussed there, an airflow containing particulate matter is mixed with liquid water at room temperature by vaporization. Here, the airflow is directed perpendicularly towards a filter, as a result of which the matter particles penetrate too deep into the pores of the filter element, so that this filter element is clogged after a certain time of use. As a consequence, the system must be opened to replace the filter after about two weeks. A further disadvantage is that gravity constitutes the generating force in the removal of the liquid and particulate matter suspension from the filter element. This implies that such a system has a preferred orientation required for efficient operation.

### SUMMARY

It is an object to provide a method with which the duration of effective use of the filter element is extended. In addition, it is an object to provide a filter device with which the proposed method can be employed. Such a filter device may be deployed for a prolonged period to perform uninterrupted measurements. Due to this, delays and costs resulting from maintenance work will be reduced.

Furthermore, it is an object to provide a filter device with a method that can function in an orientation independent manner. Such a device can be deployed in arbitrary locations, independently from the orientation with respect to the floor surface, or from the direction of gravity.

These objects are achieved by a filter device and a method for filtering out particulate matter from a mixture of gas and particulate matter.

According to an aspect, there is provided a filter device for filtering out a particulate matter from a mixture of gas and particulate matter, comprising a supply region, in which a liquid and the gas with the particulate matter are entered into the filter device; a discharge region, in which the liquid with the particulate matter and the gas are discharged from the filter device; a filter chamber, comprising a primary channel that is substantially elongated along a longitudinal axis, to which the liquid and the gas with the particulate matter are supplied from the supply region; a secondary channel, from which the gas after filtering is discharged into the discharge region; a filter element that comprises an active filter surface permeable to the gas and impermeable to the particulate matter and the liquid; a boundary surface that forms a physical separation between the primary channel and the secondary channel, and comprises the filter element. The filter device is characterized by having a supply conduit arranged for producing a volume packet train of liquid and gas with particulate matter, wherein the supply conduit comprises at least a connective portion in which a gas supply conduit for the supply of an inflowing gas with particulate matter and a liquid supply conduit for the supply of an inflowing liquid merge into a joint conduit that ends in the supply region. Furthermore, the filter chamber is arranged to, during use of the filter device, let the volume packet train of alternately liquid and gas with particulate matter flow through the primary channel along the active filter surface, in a direction substantially parallel to the longitudinal axis.

According to another aspect, there is provided a method for filtering out a particulate matter from a mixture of a gas and particulate matter using the filter device according to any one of the preceding claims. The method comprises forming a volume packet train of alternately liquid and the gas with the particulate matter; supplying the volume packet train of alternately liquid and gas with particulate matter to the supply region of the primary channel; transporting the volume packet train of alternately liquid and gas with particulate matter substantially in a direction parallel to the longitudinal axis through the primary channel from the supply region along the active filter surface of the filter element; removing the gas from the volume packets train of alternately liquid and gas with particulate matter in the primary channel, by letting only the gas traverse the filter element; forming of a suspension of the liquid and the particulate matter left behind in the filter element into an outflowing liquid with particulate matter; and removing the outflowing liquid with particulate matter from the primary channel.

Because the filter device is arranged to alternately generate volume packets of liquid and volume packets of gas with particulate matter during use, en to let these packets flow through the primary channel along the active filter surface, the particulate matter particles will not rapidly clog the active filter surface. Through the fact that the gas can traverse the active filter surface, while the particulate matter is left behind in the upper layer of the active filter surface, a subsequent volume packet of liquid will carry along the lagging particulate matter with it, and sweep clean the filter element. By using a train of alternately volume packets of liquid and of gas with particulate matter, the actions of supplying, filtering and rinsing can be carried out in a cycle, so that the filter device may function uninterruptedly for a prolonged time.

The filter device and filter method described here do not utilize gravity as a motive for one of the actions in de filter method, so that application of the described filter method using the filter device may be executed orientation independently.

### BRIEF DESCRIPTION OF THE DRAWINGS

Embodiments will be described below, by way of example only, with reference to the accompanying schematic drawings in which corresponding reference symbols indicate corresponding parts, and in which:
FIG. 1 shows a filter device according to an embodiment, and illustrates a filter method;
FIG. 2 and 3 illustrate the filter method according to an embodiment;
FIG. 4 shows a cross sectional view of the membrane;
FIG. 5 depicts a filter device according to an alternative embodiment, and
FIG. 6A and 6B show filter elements according to various embodiments of the filter device.

The figures are only meant for illustrative purposes, and do not serve as restriction of the scope or the protection as laid down by the claims.

### DETAILED DESCRIPTION

During use and with the aid of the filter method described below, the filter device is arranged to separate from the gas the particulate matter that is initially in the gas. A liquid exports the particulate matter from the filter device, after it has been separated from the gas. With the proposed filter device and filter method, samples from the particulate matter that forms a suspension together with the liquid can be easily acquired.

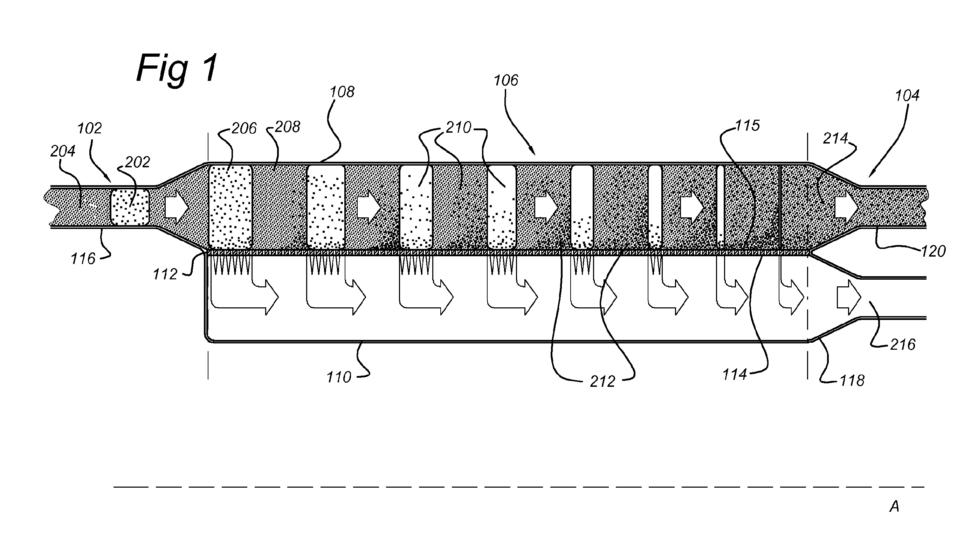

The gas, particulate matter, and liquid pass through a primary channel along a filter element: FIG. 1 shows a filter device according to an embodiment. This embodiment comprises a supply region 102, a discharge region 104, and a filter chamber 106. The filter chamber 106 comprises a primary channel 108 and a secondary channel 110. The primary channel 108 and the secondary channel 110 are at least partially adjoining. The adjoining portions of the primary channel 108 and the secondary channel 110 form a boundary surface 112.

The primary channel 108 has an elongated shape that defines a longitudinal axis A. The primary channel 108 may be curved, so that the longitudinal axis A may be described with a curve.

The boundary surface 112 in the filter chamber 106 comprises a filter element 114. In one embodiment, the filter element 114 may span an area. This area, the "active filter surface" 115, represents a possibly curved and not necessarily continuous surface. The active filter surface 115 refers to the portion of the filter element 114 that performs the function of filtering out the particulate matter from the gas. This term should be distinguished from the "effective filter surface" of the filter element 114, which is related to the efficiency with which the filter element 114 performs its function with respect to specific particle types.

The operation of the filter device is based on filtering out particulate matter from a gas by means of a filter element 114 that is arranged to be permeable for the gas but impermeable for the liquid and for the particulate matter. The gas containing the particulate matter on one hand and the liquid on the other hand are entered into the filter device via the supply region 102. This supply region 102 constitutes the starting point of the primary channel 108 through which gas and liquid are transported. The filter device is arranged to let the liquid and the gas containing particulate matter flow through the primary channel 108 and along the active filter surface 115 during use. The elongated shape of the primary channel 108 brings about that gas and liquid flow through the primary channel 108 with an average local velocity substantially parallel to the longitudinal axis A.

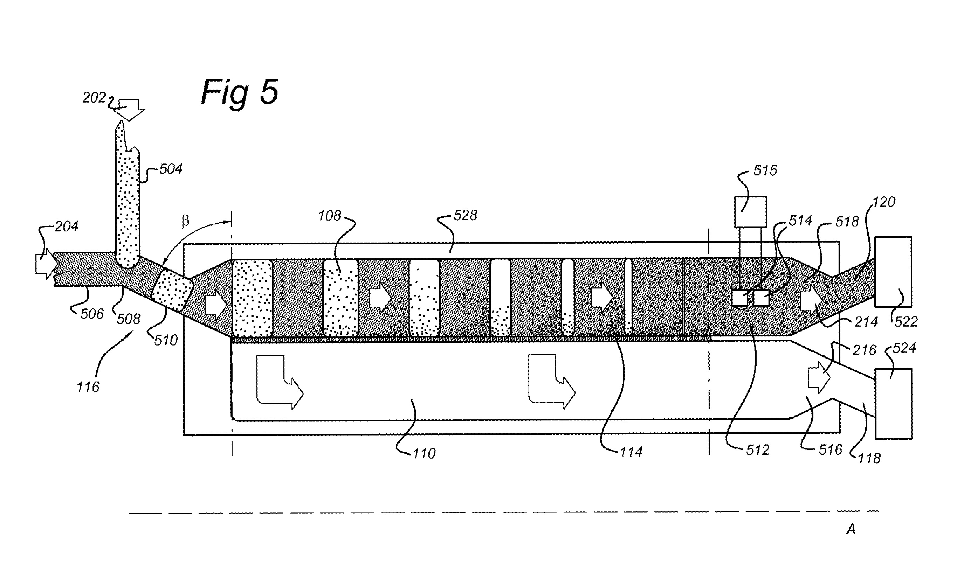

The gas with particulate matter and the liquid are supplied in alternating volume packets: FIG. 1 also illustrates the method in which the filter element 114 separates the particulate matter from the gas. Here, a method is provided for leading volume packets of gas with particulate matter 206 on the one hand, and volume packets of liquid 208 on the other hand to the supply region 102 and through the primary channel 108. The volume packets of gas with particulate matter 206 and the volume packets of liquid 208 are coherent, which implies that each of such volume packets has a continuous boundary surface, without holes or loose portions. The volume packets of liquid 208 and volume packets of gas with particulate matter 206 alternate. Each volume packet 206, 208 extends over a certain portion of the primary channel 108, and each boundary surface between a volume packet of gas with particulate matter 206 on the one hand and a volume packet of liquid 208 on the other hand terminates on an inner wall of the primary channel 108. The consecutive volume packets within the primary channel 108 proverbially seal each other off and jointly form a volume packet train of liquid and gas with particulate matter 210. A method for generating the volume packet train of liquid and gas with particulate matter 210 is explained hereafter with reference to FIG. 5. Volumetric differences between the liquid and gaseous components respectively influence the concentration of the particulate matter in an outflowing liquid with particulate matter 214. Preferably, a volume ratio during use is at most 1 part liquid to 10,000 parts of gas. The use of a larger liquid volume is possible, although this will result in a low particulate matter concentration within the liquid. In the application of the filter device for analysis purposes, a resulting low signal-to-noise ratio of a particulate matter measurement may be disadvantageous for instance with respect to the measurement accuracy and the detection threshold.

A common concentration of particulate matter in the open air is 20 micrograms per cubic meter. By application of the filter device with the given ratio between the supplied liquid and gas components and via the filtering operation, a liquid with particulate matter concentration of about 20 micrograms per 100 millilitres is achieved. Such a low concentration does not influence the viscosity of the outflowing liquid with particulate matter 214.

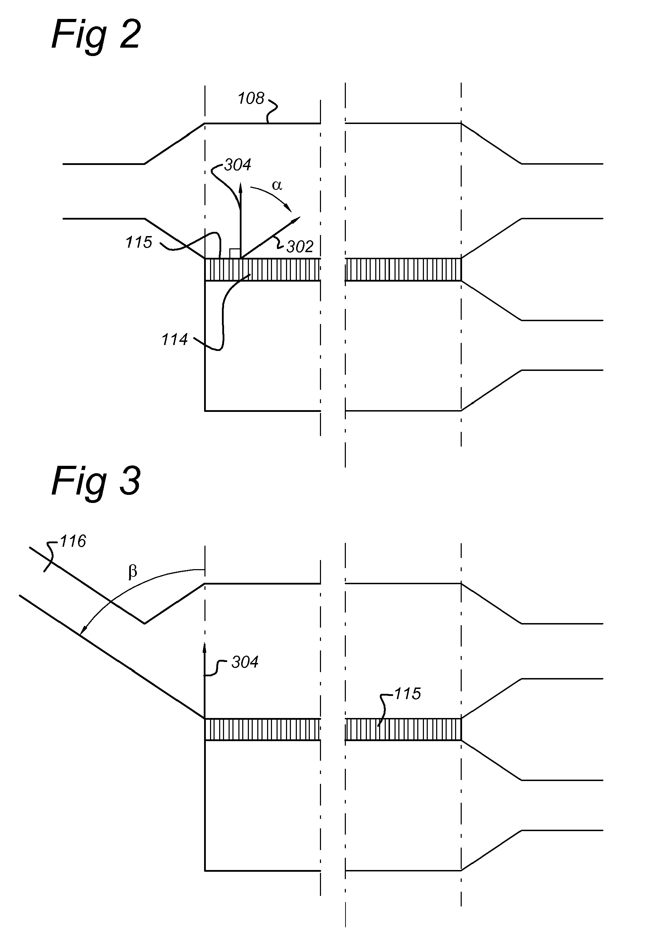

The gas with particulate matter grazes the filter element 114: FIG. 2 illustrates the method in which the volume packet train of liquid and gas with particulate matter 210 traverses the filter element 114. As mentioned, the actual filtering out of the particulate matter from the gas with particulate matter occurs by letting the volume packets of gas with particulate matter 206 within the primary channel 108 flow substantially along the filter element 114. The matter particles ought to 'graze' the active filter surface 115. The flow profile of the volume packet train of liquid and gas with particulate matter 210 may be represented by a spatial distribution of local flow velocity vectors 302. The direction of the local velocity vector 302 near the active filter surface 115 may be characterized by a first angle α between the local velocity vector 302 and a local normal vector 304 of the active filter surface 115. In this convention, the grazing character is explained as the local velocity vector 302 having a velocity component perpendicular to the active filter surface 115 that is small with respect to the velocity component parallel to the active filter surface 115. Preferably, the local velocity vector 302 is entirely parallel to the locale active filter surface 115, corresponding to the first angle α being equal to 90 degrees clock-wise, as depicted in FIG. 2. Nevertheless, an entirely parallel average local flow velocity may not always be realized, for example for embodiments of the filter device having a supply conduit 116 oriented not entirely parallel to the active filter surface 115. More generally, the grazing character may be explained as a local velocity vector 302 with the velocity component parallel to the active filter surface 115 being larger than the perpendicular velocity component. This corresponds to a value of the first angle α between 45 and 135 degrees clock-wise, as shown in FIG. 2. The orientation possibilities for the supply conduit 116, which also influence the local velocity vector 302, are explained hereafter with reference to FIG. 3.

The gas is drawn through the filter element 114 by an underpressure, applied in the secondary filter chamber. The filter element 114 is arranged to only allow the gas to permeate, and bar passage to the particulate matter. The gas will traverse the filter element 114 and accumulate in the secondary channel 110, while the particulate matter is left behind on and in the filter element 114 on the side of the primary channel 108.

In order to bring about the movement of the gas through the filter element 114, an underpressure is applied during use within the secondary channel 110 with respect to the pressure P₁ that prevails within the primary channel 108. Since the filter element 114 is permeable for the gas, the pressure difference between P₂ and P₁ will bring about that during use an equilibrium state will be established with respect to the transportation of liquid and gas through the channels 108, 110. In an embodiment, a device may be provided at the end of the secondary channel 110 for maintaining the underpressure P₂ during use. An air pump is a suitable means for this purpose. The effect of the pressure value P₂ within the secondary channel 110 on the efficiency of the filter device is amongst others dependent of the selected geometry of the channels 108, 110 and the properties of the filter element 114, e.g. the size of the active filter surface 115. Optimization of the filter properties as a function of the underpressure P₂ is a routine matter, and may not limit the scope of the invention.

The filter element 114 is wiped clean by the liquid: FIG. 1 shows also how the particulate matter is drained off with the liquid. The filter element 114 is arranged not to allow the liquid to pass. Because the gas traverses the filter element 114, the volume packet of gas with particulate matter 206 will gradually reduce. The volume packets of liquid 208, which will not reduce in volume, will gradually come closer together while flowing through the primary channel 108. As the particulate matter cannot traverse the filter element 114, it will precipitate and remain behind here after the gas has traversed the filter element 114. The deposited particulate matter may subsequently be incorporated in the following volume packets of liquid 208. As the particulate matter partially consists of salts and partially of non-dissolvable components, the outflowing liquid will simultaneously form a solution and a suspension with the particulate matter 214. Here, we will exclusively use the term "suspension" to indicate the mixture of liquid and particulate matter. The suspension is created at the moment that a volume packet of liquid crosses the active filter surface 115 on which the particulate matter

remained behind. As explained, the coherent property of the volume packet of liquid 208 results in a contact to the inner surface of the primary channel 108, and as a consequence will touch the active filter surface 115 on passage. The movement of the volume packets of liquid 208 with a substantial component parallel to the active filter surface 115 causes the remaining particulate matter to be 'swept off' the filter surface 115. The volume packet of liquid 208 subsequently flows further through the primary channel 108 along the active filter surface 115, until it arrives at the discharge region 104. In the discharge region 104, the volume packets of gas with particulate matter 206 have practically completely disappeared from the volume packet train of liquid and gas with particulate matter 210, and the volume packets of liquid 208 are joined into one entity.

After the clean sweeping, the filter element 114 is ready again for a new filter operation. The steps of supplying, filtering and clean sweeping can be executed in a cycle, so that the filter device can operate uninterruptedly. The method described here does not exploit gravity as a motive for one of the actions of the filter process, so that application of the described filter method using the filter device may in principle be executed independent of orientation.

Further explanation on the grazing of the flow: FIG. 3 shows a method in which the grazing character of the volume packet train of liquid and gas with particulate matter 210 may be actualized. For optimal operation of the filter device, the integrity of the supplied volume packet train of liquid and gas with particulate matter should be preserved as much as possible, and therefore have an average flowing direction that is as uniform as possible. If possible, swirling in the flow should be prevented. Such a flow profile may be achieved by orienting the supply conduit 116 at its connection to the supply region 102 at an inclination with and preferably substantially parallel to the local active filter surface 115. A second angle β between the supply conduit 116 and the local normal vector 304 of the active filter surface 115, as depicted in FIG. 3, should therefore assume a value between 45 and 90 degrees anti-clockwise. A value of 90 degrees for the second angle β corresponds to the supply conduit being parallel to the local active filter surface 115. The given range for the second angle β corresponds to a range for the first angle α given by 90° ≤ α ≤ 135° clock-wise. Within this range it is held that a smaller value for the first angle α results in a lower clogging rate of the filter element 114 during use.

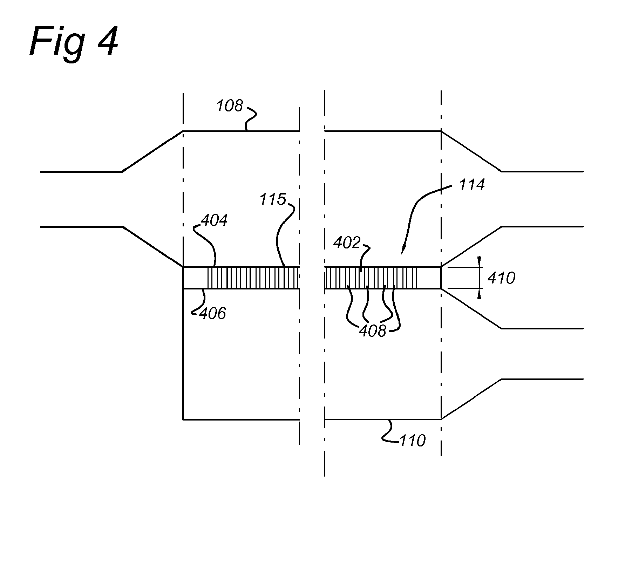

The filter element 114 comprises a membrane 402 in order to allow traversal of the gas and to block the particulate matter: FIG. 4 shows a filter element 114 according to an embodiment. This filter element 114 is situated in-between the primary channel 108 and the secondary channel 110. The filter element 114 is arranged to, during use, let the gas flowing through the primary channel 108 permeate, and prevent the traversal of the particulate matter and the liquid. In an embodiment, the filter element 114 comprises a membrane 402 that is permeable for gas, but impermeable for the particulate matter and for the liquid. The membrane 402 is at least partially limited by a first surface 404 and a second surface 406. The first surface is adjacent to the primary channel 108 and the second surface is adjacent to the secondary channel 110. On a macroscopic scale, the membrane 402 may anywhere be attributed a local membrane thickness 410, for example defined by a local shortest distance between the first surface 404 and the second surface 406. The local membrane thickness 410 is not necessarily equally large in every location. The membrane 402 comprises so-called "pores" 408 that form connecting ducts between the first surface 404 and the second surface 406. These pores 408 in the membrane are arranged to allow passage to the gas, but not to the particulate matter. As a result of these permeability properties, the primary channel 108 and the secondary channel 110 are physically separated for the liquid and the particulate matter, yet the primary channel 108 and secondary channel 110 are in mutual communication with respect to the gas.

The membrane 402 gets clogged less rapidly: By means of the aforementioned filter method, the matter particles will mainly be captured in the upper portion of the filter element 114, as a result of their lateral movement with respect to the active filter surface 115. The pores 408 of the membrane 402 clog less rapidly because the matter particles do not penetrate deeply into the pores 408. Because of this, the membrane 402 has a longer operational lifetime, and the uninterrupted time of use of the filter device will effectively be prolonged.

Generation of the volume packet train: FIG. 5 illustrates an embodiment and a method by which the volume packet train of liquid and of gas with particulate matter 210 may be generated. This embodiment corresponds to a filter device as in FIG. 1, but here the supply conduit 116 comprises a gas supply conduit 504, a liquid supply conduit 506, a connective portion 508 and a joint conduit 510. The supply conduit 116 may be split up in the connective portion 508. As viewed in the direction along with the flow of gas and liquid, the filter device begins at the gas supply conduit 504 and the liquid supply conduit 506. Gas supply conduit 504 and liquid supply conduit 506 meet in the connective portion 508 and merge into the joint conduit 510. In this joint conduit 510, the volume packet train of liquid and of gas with particulate matter 210 is generated. The joint conduit 510 is connected to the supply region 102 of the filter device, so as to let the volume packet train of liquid and gas with particulate matter 210 enter into the supply region 102 of the primary channel 108.

The volume ratios of the volume packets influence the particulate matter concentrations in the outflowing liquid with particulate matter 214. The generation of the volume packet train of liquid and gas with particulate matter 210 is affected by the supply rates of the inflowing gas with particulate matter 202 and of the inflowing liquid 204 in the gas supply conduit 504 and the liquid supply conduit 506. These supply rates depend on various properties of the filter device. Among these properties is the underpressure P₁ that is applied in the primary channel 108 as well as the underpressure P₂ in the secondary channel 110. Underpressure may be applied by providing the discharge region 104 with means for applying underpressure. As an example, a liquid suction device 522 e.g a liquid pump may be connected to the liquid discharge conduit 120 and/or a gas suction device 524 may be connected to the gas discharge conduit 118.

Liquid samples may be collected and analyzed: Besides a filtering functionality, the filter device may be applied as a measurement device by the addition of some elements. The sampled liquid with the suspended particulate matter may be utilized as object for the determination of properties of the particulate matter. FIG. 5 shows an alternative embodiment of the filter device, whereby the primary channel 108 comprises a measurement chamber 512 in which at least one measurement probe 514 is installed. Such a measurement probe 514 constitutes a sensor for a measurement device 515 that is arranged to determine the properties of the particulate matter in the liquid. In an alternative embodiment, the measurement chamber 512, possibly with the at least one measurement probe 514 and the measurement device 515, may also be located outside of the primary channel 108, for example by connecting these elements downstream to the liquid discharge conduit 120.

In an embodiment, the filter device may be at least partially enclosed by a casing 524, in order to render the filter device easy to handle, and to protect it from harmful outside influences.

Various embodiments may be composed by combination of the original embodiment of FIG. 1 with a selection from the collection of additional elements shown in FIG. 5.

Embodiment with adjacent channels and a flat membrane: One exemplary application of the filter device and method described here relates to the analysis of particulate matter in air. If water is used as a liquid then this embodiment of the filter device will only operate above the freezing point of water. Here, the particulate matter is rinsed off the membrane 402 by a water solution. The membrane 402 may for example be composed of a hydrophobic polymer like polytetrafluoroethylene (PTFE). In one embodiment, the primary channel 108 has a square cross-section with typical dimensions of 2 mm times 2 mm. The flat PTFE membrane 402 is 30 micrometers thick on average. The flat membrane 402 is spanned and therefore does not require a significant strength of its own. By the application of a filter device with a PTFE membrane with a membrane pore size of 0.2 micrometer or larger on average, it is possible to filter out particulate matter having an effective diameter of 50 nanometres or larger from air. An average value of 5 micrometer for the pore size is given as upper limit for this application in order for the filter to still be able to block particulate matter. For a pore size below 0.2 micrometer, almost no air will be able to traverse the PTFE membrane, resulting in the filter device not being able anymore to execute its intended function. In this embodiment, the volume packets of liquid preferably have a packet length of at least 6 millimetres, resulting in a liquid packet volume of at least 24 microlitres. The volume packets of water 208 are required to completely wet the surrounding walls of the primary channel 108. If this is not the case, then the hydrophobic PTFE will excessively repel the water, resulting in too much of the particulate matter remaining behind on the active filter surface 115. In this embodiment, the pressure P₂ during use is at most 20 kilopascals lower than the pressure P₁. If the pressure P₁ during use rises to a value that is more than 20 kilopascal above P₂, then this indicates a clogging of the membrane 402. In a further embodiment, the filter device may be arranged with the purpose of filtering out particulate matter from the open air or to analyze samples of this, so that the pressure P₁ will be practically equal to the atmospheric pressure.

Experiments have been conducted with the filter devices having various lengths for the primary channel 108 and the active filter surface 115, varying from 5 to 150 centimetres. Starting with a length of 5 cm, an air filter output of 1 to 2 litres per minute is achieved. With increasing lengths of the primary channel 108, this air filter output barely increases. An advantage of a greater length of the primary channel 108 and the active filter surface 115 is that by the occurrence of slight pollution of the active filter surface 115, the filter operation can relocate to a position further down the primary channel 108. This results in a prolongation of the operational lifetime of the filter element 114. The gas discharge conduit 118 preferably has a diameter of 4 millimetres and the liquid discharge conduit 120 preferably has a diameter of 1 millimetre. Other values for these diameters may be selected though.

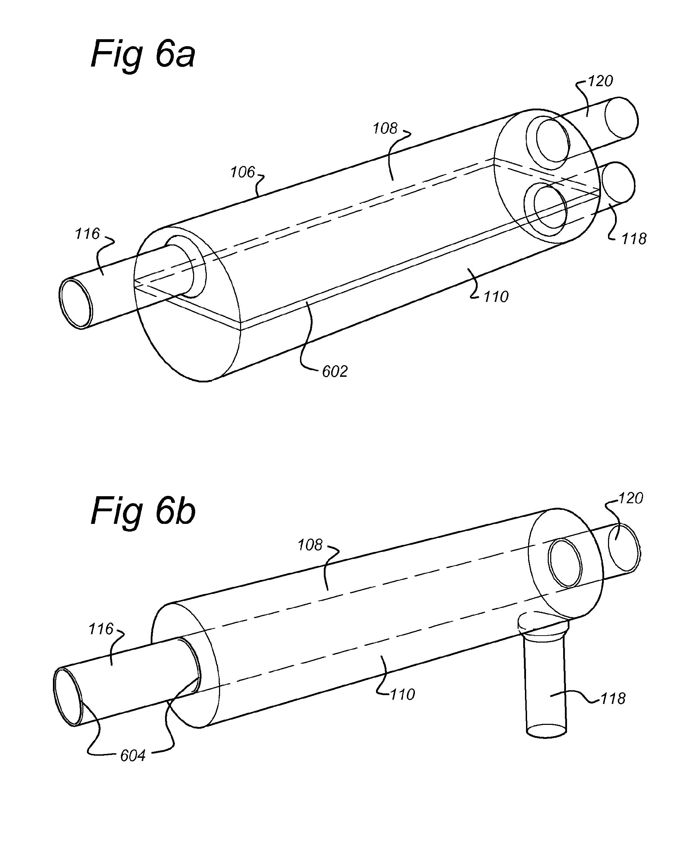

Various configurations for the filter device: FIG. 6 shows a couple of ways in which the filter device may be geometrically formed. The primary difference in these embodiments is found in the shape of and interconnection between the primary channel 108, the secondary channel 110, and the filter element 114. FIG. 6A shows an embodiment in which the filter chamber 106 is cylindrically shaped, and in which the filter element 114 constitutes a surface that is spanned along the length direction of the filter chamber 106 and subdivides the filter chamber 106 approximately midway into the primary channel 108 and the secondary channel 110.

FIG. 6B shows the primary channel 108 and the secondary channel 110 in a coaxial configuration, separated by a cylindrically shaped filter element 114 that encloses the primary channel 108. In a further embodiment, the filter element 114 is formed by a hollow fibre made up of PTFE. Here, it may even be possible that the entire boundary of the primary channel 108 is formed by this hollow PTFE fibre. The hydrophobic property of PTFE and the isotropic cross-section of the primary channel 108 have the result that the liquid cannot be repelled by the filter element 114 towards an area within the primary channel 108 in which no hydrophobic material is present. Consequently, the coherence of the volume packets of liquid 208 is less affected, so that volume packets of liquid with a smaller volume may be supplied. In this embodiment, the filter element 114 preferably has an internal diameter of 1 to 4 millimetres, so that volume packets of liquid 208 of at least 3 microlitres become possible. This increases the resulting concentration of the particulate matter in the liquid, which will favour the measurement results from a particulate matter analysis. Preferably, the cylindrical shape of the hollow fibre should remain intact, especially during use. This requires a fibre wall of sufficient strength. If such a hollow fibre contains PTFE, then the thickness of the fibre wall should be larger than the thickness of a flat PTFE membrane. A thickness of 100 micrometers or larger is desired, whereby increasing the diameter of the hollow fibre requires that the thickness of the fibre wall is also increased.

In an alternative embodiment, the isotropic character of FIG. 6B may be combined with a tilted active filter surface 115, which will result in a filter element 114 having an active filter surface 115 shaped like a truncated cone.

Analysis of the sampled liquid with particulate matter. Specific properties of the particulate matter that may be determined in health evaluations are for example the electrochemical redox, pH, and conductivity properties. The measurement of the chemical composition of particulate matter in the form of anions and cations with for example capillary electrophoresis for determining the origins of the particulate matter constitutes another application. Combinations are conceivable. A broad range of analysis techniques may be employed for the measurement of specific properties of the particulate matter in the sampled suspension. A non-limiting set of useful analysis techniques comprises electrochemical analysis, mass spectroscopy, ion chromatography, liquid chromatography, (organic) carbon analysis, reactive oxygen species (ROS) analysis, electrophoresis, spectroscopy, photometry en gravimetry.

By using a system comprising two filter devices for example, in which one filter device is provided with a filter that collects all particulate matter, and by means of subtraction, correction may be achieved for the possible interfering effect of reactive gasses.

Advantageously, the described filter device provides an increase of the accuracy with which concentration properties of particulate matter in a gas may be measured. By continuous supply of the volume packet train of liquid and gas with particulate matter 210, the described filter device may function uninterruptedly as filter device or sample device. By means of the uninterrupted sample technique, routine execution of measurement of particulate matter becomes possible.

The descriptions above are intended to be illustrative, not limiting. It will be apparent to the person skilled in the art that alternative and equivalent embodiments of the invention can be conceived and reduced to practice, without departing from the scope of the claims set out below.

### REFERENCES

R. Al-Horr, S. Samanta, P. K. Dasgupta, "A Continuous Analyser for Soluble Anionic Constituents and Ammonium in Atmospheric Particulate Matter", Environ. Sci. Tech. 37, pp 5711-5720, 2003

### LIST OF FIGURE ELEMENT

- 102: supply region
- 104: discharge region
- 106: filter chamber
- 108: primary channel
- 110: secondary channel
- 112: boundary surface
- 114: filter element
- 115: active filter surface
- 116: supply conduit
- 118: gas discharge conduit
- 120: liquid discharge conduit
- A: longitudinal axis

- 202: inflowing gas with particulate matter
- 204: inflowing liquid
- 206: volume packet of gas with particulate matter
- 208: volume packet of liquid
- 210: volume packet train of alternately liquid, and gas with particulate matter
- 212: deposited particulate matter
- 214: outflowing liquid with particulate matter
- 216: outflowing gas

- 302: local velocity vector
- 304: local normal vector
- α: first angle
- β: second angle

- 402: membrane
- 404: first surface
- 406: second surface
- 408: pore
- 410: local membrane thickness

- 504: gas supply conduit
- 506: liquid supply conduit
- 508: connective portion
- 510: joint conduit
- 512: measurement chamber
- 514: measurement probe
- 515: measurement device
- 516: gas output opening
- 518: liquid output opening
- 522: liquid suction device
- 524: gas suction device
- 528: casing

- 602: flat membrane
- 604: cylindrical membrane

## Claims

1. Filter device for filtering out a particulate matter from a mixture of gas and particulate matter, comprising
a. a supply region (102), in which a liquid and the gas with the particulate matter are entered into the filter device;
b. a discharge region (104), in which the liquid with the particulate matter and the gas are discharged from the filter device;
c. a filter chamber (106), comprising
i. a primary channel (108) that is substantially elongated along a longitudinal axis (A), to which the liquid and the gas with the particulate matter are supplied from the supply region (102);
ii. a secondary channel (110), from which the gas after filtering is discharged into the discharge region;
iii. a filter element (114) comprising an active filter surface (115) permeable to the gas and impermeable to the particulate matter and the liquid;
iv. a boundary surface (112) forming a physical separation between the primary channel and the secondary channel, and comprising the filter element;
**characterized in that**
the filter device is further provided with a supply conduit (116) arranged for producing a volume packet train of liquid and gas with particulate matter (210), wherein the supply conduit (116) comprises at least a connective portion (508) in which a gas supply conduit (504) for the supply of an inflowing gas with particulate matter (202) and a liquid supply conduit (506) for the supply of an inflowing liquid (204) merge into a joint conduit (510) that ends in the supply region (102), and wherein the filter chamber (106) is arranged to, during use, let the volume packet train of alternately liquid and gas with particulate matter (210) flow through the primary channel (108) along the active filter surface (115), in a direction substantially parallel to the longitudinal axis (A).

2. Filter device for filtering out a particulate matter according to any one of the preceding claims, wherein the filter element (114) comprises a membrane (402), which spans at least a portion of the boundary surface (112).

3. Filter device for filtering out a particulate matter according to claim 2, wherein the membrane (402) consists of a hydrophobic polymer.

4. Filter device for filtering out a particulate matter according to any one of the preceding claims, wherein the boundary surface (112) between the primary channel (108) and the secondary channel (110) assumes a shape selected from the set consisting of a plane, a cylindrical surface and a conical surface.

5. Filter device for filtering out a particulate matter according to any one of the preceding claims, wherein the supply conduit (116) is oriented at a second angle (β) with respect to a local normal vector (304) of the active filter surface (115) where the supply conduit (116) is connected to the supply region (102), and wherein the supply conduit (116) is arranged to let the volume packet train of alternately liquid and gas with particulate matter (210) flow into the primary channel (108) while grazing the filter element (114).

6. Filter device for filtering out a particulate matter according to claim 5, wherein the second angle (β) assumes a value between 45° and 90°.

7. Filter device for filtering out a particulate matter according to any one of the preceding claims, wherein the discharge region (104) in the primary channel (108) comprises a measurement chamber (512) for collecting the liquid with the particulate matter, wherein the measurement chamber (512) is provided with at least one measurement probe (514) for measuring at least one physico-chemical property of the particulate matter in the liquid.

8. Method for filtering out a particulate matter from a mixture of a gas and particulate matter using the filter device according to any one of the preceding claims, the method comprising:
a. forming a volume packet train of alternately liquid and the gas with the particulate matter (210);
b. supplying the volume packet train of alternately liquid and gas with particulate matter to the supply region (102) of the primary channel (108);
c. transporting the volume packet train of alternately liquid and gas with particulate matter (210) substantially in a direction parallel to the longitudinal axis (A) through the primary channel from the supply region (102) along the active filter surface (115) of the filter element (114);
d. removing the gas from the volume packets train of alternately liquid and gas with particulate matter (210) in the primary channel (108), by letting only the gas traverse the filter element (114);
e. forming of a suspension of the liquid and the particulate matter left behind in the filter element (114) into an outflowing liquid with particulate matter (214);
f. removing the outflowing liquid with particulate matter (214) from the primary channel (108).

9. Method for filtering out a particulate matter according to claim 8, wherein in the supply region (102) a local velocity vector (302) of a flow of the volume packet train of liquid and gas with particulate matter (210) is at a first angle (α) between 90° and 135° with a local normal vector (304) of the active filter surface (115).

10. Method for filtering out a particulate matter according to claim 8 or 9, wherein an underpressure P₂ prevails in the secondary channel (110) with respect to the pressure P₁ prevailing in the primary channel (108).

11. Method for measuring specific properties of particulate matter using a filter device according to any of the claims 1 - 7, by analyzing samples of the outflowing liquid with particulate matter (214) using at least one method of analysis selected from a group consisting of electrochemistry, mass spectroscopy, ion chromatography, liquid chromatography, (organic) carbon analysis, ROS analysis, electrophoresis, spectroscopy, photometry, gravimetry.

12. Method measuring specific properties of particulate matter using a method for filtering out the particulate matter from a gas according to any of the claims 8 - 10, by analyzing samples of the outflowing liquid with particulate matter (214) using at least one method of analysis selected from a group consisting of electrochemistry, mass spectroscopy, ion chromatography, liquid chromatography, (organic) carbon analysis, ROS analysis, electrophoresis, spectroscopy, photometry, gravimetry.
